# EUROPEAN PATENT APPLICATION

(11) **EP 3 763 996 A1**
(43) Date of publication of application: **13.01.2021**
(21) Application number: 19185176.5
(22) Date of filing: 09.07.2019
(51) Int. Cl.: F23G 5/00, F23G 5/50, F23N 5/00, F23N 5/08, G01J 5/04

(54) **INCINERATION PLANT FOR SOLID MATERIAL**

(71) Applicant: Doosan Lentjes GmbH, 40880 Ratingen Nordrhein-Westfalen (DE)
(72) Inventor: KRÜLL, Ferdinand, 40470 Düsseldorf (DE); KARPINSKI, Andres, 44285 Wuppertal (DE)
(74) Representative: Feucker, Max Martin

(57) **Abstract**

The present invention relates to an incineration plant for solid material having
- a combustion material inlet through which solid material can be introduced,
- a combustion chamber (1) in which the solid material is introduced and in which the solid material is combusted,
- a combustion grate (2) with which the solid material and combusted solid material as solid material bed (3) can be conveyed through the combustion chamber (1),
- a primary air supply below the top of the combustion grate (2),
- at least one movably mounted pyrometer (4) for measuring the temperature of the solid material bed (3) along a line (S).

## Description

The present invention relates to an incineration plant for solid material such as waste or biomass, the incineration plant having a combustion material inlet through which solid material can be introduced, preferably a feed shaft in which the solid material is introduced and which leads to a combustion chamber in which the solid material is combusted, a combustion grate with which the solid material and combusted solid material as solid material bed can be conveyed through the combustion chamber and a primary air supply below the top of the combustion grate.

The combustion grate is usually arranged within a lower section of the combustion chamber. The solid material and combusted solid material can be conveyed by the combustion grate through the combustion chamber in particular from an end of the combustion material feed shaft to a slag container. Primary air is supplied from below the combustion grate to the solid material arranged on the combustion grate, so that the solid material arranged on the combustion grate is combusted with the primary air.

The combustion grate is preferably embodied as reciprocating grate, but it is also possible that the combustion grate is embodied in a different way, for example as vibrating grate or roller grate.

Additionally, nozzles may be arranged above the combustion grate with which secondary air, tertiary air for afterburning or an oxygen poor carrier gas can be provided to the combustion gases.

At least one empty pass may be arranged downstream of the combustion chamber extending vertically or horizontally, wherein the flue gases flow from the combustion chamber through the at least one empty pass to a heat recovery steam generator. In particular, two, three or more parallel empty passes may be embodied.

The heat recovery steam generator downstream of the empty pass may be arranged (in sections) vertically and/or horizontally, wherein also an oblique orientation is possible.

The walls of the combustion chamber, the empty pass(es) and the heat generator are usually equipped with heat exchangers (i.e. tubes), wherein the heat exchange medium of the heat exchangers is in particular provided to one common boiler drum.

A flue gas purification device downstream of the heat recovery steam generator may comprise elements for dedusting, scrubbing and/or desulfurization (such as SCR or SNCR) of the flue gas. A chimney may be arranged downstream of the flue gas purification device.

It is known to measure the (surface) temperature of the solid material bed on top of the combustion grate and to control the amount of primary air supply and/or the conveying speed of the solid material bed (in an open or closed loop). In this regard, EP 0 716 266 B1 teaches to identify glowing solid material at the end of the combustion grate with sensors that are directed on a fixed location on the combustion grate. Accordingly, multiple sensors are necessary to monitor the solid material bed at multiple locations. Furthermore, it is known to monitor the temperature distribution of a greater area of the solid material bed in a spatially resolved manner with an infrared camera. But such infrared cameras are expensive and sensitive.

In order to detect the temperature of the solid material bed at multiple locations at the same time in a more inexpensive way EP 2 784 392 B1 proposes a radiation detector with a pin hole aperture having multiple optical sensors. With such a detector the temperature can be measured only at multiple discrete predetermined locations.

In view of this, it is an object of the present invention to provide an incineration plant and a method for operating an incineration plan, with which the temperature of the solid material bed can be measured in an alternative and inexpensive way in a spatially resolved manner.

This object is achieved by an incineration plant and by a method for operating the incineration plant with the features of the respective independent claim. Preferred embodiments of the invention are described in the sub claims and in the whole description, wherein single features of the preferred embodiments can be combined with each other in a technically meaningful manner.

This object is in particular achieved by an incineration plant for solid material having a combustion material inlet through which solid material can be introduced, a combustion chamber in which the solid material is introduced and in which the solid material is combusted, a combustion grate with which the solid material and combusted solid material as solid material bed can be conveyed through the combustion chamber, a primary air supply below the top of the combustion grate, at least one pyrometer for measuring the temperature of the solid material bed, wherein at least one pyrometer is movably mounted by a mechanical system and that a drive for the mechanical system is embodied, so that during movement of the pyrometer the temperature of the solid material bed can be measured along a line.

This object is in particular also achieved by a method for operating an incineration plant, comprising the following steps:
- Introducing solid material through a combustion material inlet into a combustion chamber,
- Combusting the solid material in the combustion chamber,
- Conveying the solid material and combusted solid material as solid material bed on a combustion grate through the combustion chamber,
- Measuring the temperature of the solid material bed with a pyrometer,
- Moving the pyrometer so that the temperature of the solid material bed is measured along a line.

With other words, the invention suggests that a simple pyrometer for measuring/obtaining the temperature in one restricted area (spot) is mounted in a movable way and that the pyrometer can be (mechanically) driven in such a way, that the temperature is measured/obtained along a line on the solid material bed. This way a spatially resolved temperature profile (at least along the line) of the solid material bed can be measured. The thus measured temperature information can be used to control (in a open or closed loop; German: Regeln oder Steuern) the operation of the incineration plant. Accordingly, a comparatively inexpensive standard pyrometer can be used, wherein at the same time it is possible to measure the temperature with only one pyrometer at multiple locations of the solid material bed.

The pyrometer is a remote sensing thermometer, which has an optical system and a single detector. The optical system is used to focus the thermal radiation of a restricted area (spot) of the solid material bed, wherein from the output signal of the single detector the temperature of the spot (restricted area) can be measured.

In one embodiment, the mechanical system has exactly one degree of freedom to be moved about, so that the temperature of the solid material bed can be measured along a straight line. For example, the mechanical system may provide a bearing, with which the pyrometer is swivel-mounted, wherein the pyrometer can only be swiveled around one axis. The bearing may be embodied in such a way that the pyrometer can be swiveled between 10° and 90°, preferably between 20° and 60° around the one axis.

The mechanical system is in particular arranged in such a way, that the straight line, along which the temperature of the solid material bed can be measured, extends in the longitudinal direction of the combustion grate, in particular in the conveying direction of the solid material bed. This way it is possible to adapt the primary air supply in dependence of the measured temperature along the longitudinal direction of the combustion grate. Accordingly, different amounts of primary air can be supplied in different regions of the combustion grate depending on the measured temperature.

In an alternative embodiment, the mechanical system has two degrees of freedom to be moved about, so that the temperature of the solid material bed can be measured along a line being curved in two dimensions. For example, the mechanical system may provide a bearing, which allows the pyrometer to be swiveled around two axes, the two axes being preferably perpendicular to each other. For example, the temperature can be measured along a zigzag shaped line or along a meandering line. This way a more or less two dimensional temperature profile of the solid material bed can be obtained and the primary air supply can be controlled in an even more spatially resolved manner. The bearing may be embodied in such a way that the pyrometer can be swiveled between 10° and 90°, preferably between 20° and 60° around the first axis and between 10° and 60°, preferably between 20° and 40° around the second axis.

Also, multiple (two or more) movably mounted pyrometers may be arranged next to each other in particular in a direction perpendicular to the conveying direction of the combustion grate. Accordingly, the temperature along multiple parallel straight or two dimensional lines can be measured at the same time. The multiple pyrometers may be mounted with one single mechanical system, which can be actuated by one single drive. Alternatively, each pyrometer may be mounted with one mechanical system, wherein each mechanical system is driven by one drive.

The drive for the mechanical system(s) can be an electric or hydraulic actuator. But, preferably the drive is a pneumatical actuator.

It is further suggested that at least one gas withdrawal port is arranged in the combustion chamber, in particular above the combustion grate on the lateral side of the combustion grate or at the top (ceiling) of the combustion chamber, wherein the gas withdrawal port is connected with an oxygen (O₂)-sensor for measuring the O₂ content of the withdrawn gas. Preferably, multiple (two, three or more) withdrawal ports are arranged on a lateral side of the combustion chamber being arranged along the combustion grate or at the top of the combustion chamber being in particular arranged obliquely to the conveying direction of the combustion grate.

One or more gas withdrawal ports connected with one or multiple oxygen sensors may be arranged on both opposite sides of the combustion grate.

By measuring the O₂ content of the combustion gases just above the solid material bed a further parameter of the combustion process is obtained and can be used to control the incineration plant. By knowing the temperature of the solid material bed and the O₂ content of the combustion gases the supply of primary air can be set to an optimized value for a complete combustion of the solid material.

Preferably, the incineration plant comprises a control unit to which the at least one pyrometer is connected, wherein the incineration plant is operated (in a closed or open loop) in dependence of the measured temperature, wherein preferably at least one of the following parameters is controlled in dependence of the measured temperature: primary air supply, solid material supply, secondary air supply, combustion grate (conveying speed of the combustion grate). In this regard, it is also suggested that the O₂-sensor is connected to the control unit and that the incineration plant is operated (in a closed or open loop) in dependence of the measured temperature and of the measured O₂ content.

In one embodiment, the pyrometer and or the mechanical system are cooled. For example, the pyrometer and/or the mechanical system are cooled by air or water. Other cooling mediums are also possible. In a preferred embodiment, the pyrometer and the mechanical system preferably including the drive are cooled commonly with a water/air cooling system. For example, the pyrometer and the mechanical system may be arranged in a respectively cooled box.

In one embodiment, the pyrometer and the mechanical system are arranged outside the combustion chamber, wherein a recess is provided in the wall of the combustion chamber through which the thermal radiation of the solid material bed advances to the pyrometer. This way, the pyrometer and the mechanical system are easily accessible for maintenance and/or exchange. In case the temperature is measured along a straight line the recess can be in shape of a small slit having only a small width (smaller than 10 or even 5 mm). In order to avoid that combustion gases from the combustion chamber advance through the recess, a slight overpressure is provided to the recess from the outside of the combustion chamber.

The invention and the technical background will now be explained with regard to the figures, which show an embodiment of the invention. The figures show schematically
- Figure 1:: a side view of a combustion chamber of a first embodiment of an incineration plant,
- Figure 2:: a part of a combustion chamber of a second embodiment of an incineration plant,
- Figure 3:: a perspective view of a combustion chamber of a third embodiment of an incineration plant and
- Figure 4:: a perspective view of the combustion chamber of a fourth embodiment of an incineration plant.

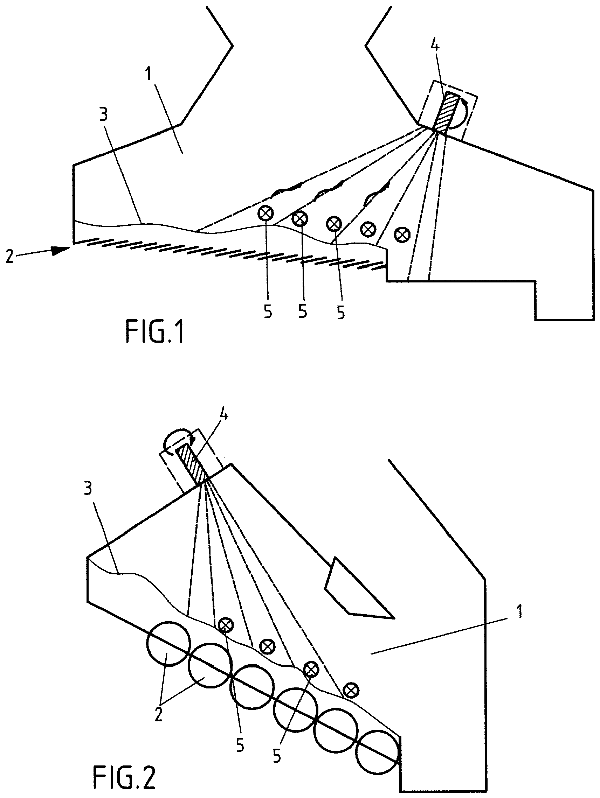

The figures depict a combustion chamber 1 of an incineration plant, wherein a combustion grate 2 (indicated as a reciprocating grate in Fig. 1 and as roller grate in Fig. 2) is arranged in the lower section of the combustion chamber 1. In use solid material, such as waste or biomass, is provided on top of the combustion grate 2. Primary air is provided from below the combustion grate 2 with respective primary air nozzles (not shown), so that the solid material is combusted on top of the combustion grate 2. The solid material and the combusted solid material is conveyed as solid material bed 3 by the combustion grate 2 through the combustion chamber 1 as known from the prior art.

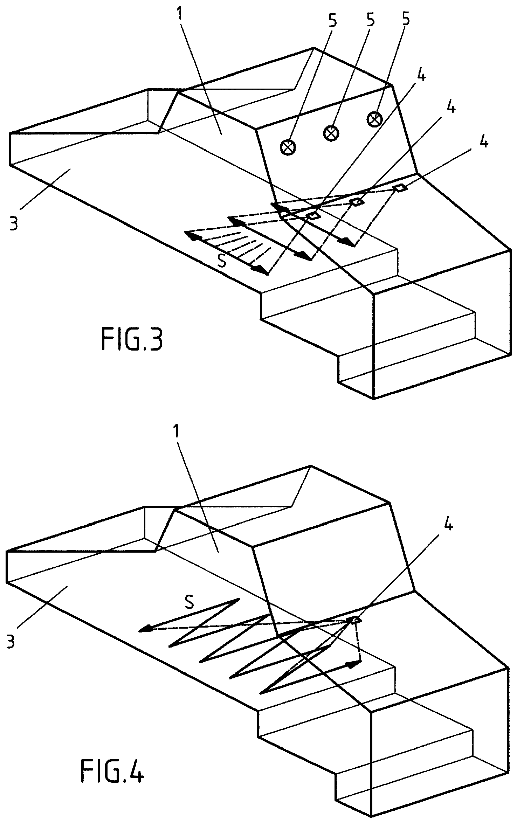

Gas withdrawal ports 5 are arranged at the lateral side of the combustion grate 2 along the conveying direction of the combustion grate 2. The gas withdrawal ports 5 are set to withdraw combustion gases just from above the solid material bed 3. The gas withdrawal ports 5 are connected with a not shown oxygen (O₂) sensor, so that the oxygen content of the combustion gas can be measured, eventually at different points along the combustion grate 2 (not shown in figures 3 and 4).

The incineration plant comprises at least one pyrometer 4 which is mounted by a mechanical system in a swivable (pivotable) way. As indicated by the dashed lines in figure 1 the pyrometer 4 can be swiveled about one axis being parallel to the rotating axis of the combustion grate 2, so that the temperature of the solid material bed 3 can be measured at multiple distinct points arranged along a straight line S.

The pyrometer 4 is arranged outside the combustion chamber 1, wherein a slit in the wall of the combustion chamber 1 is embodied, through which the thermal radiation emitted by the solid material bed 3 advances to the pyrometer 4. In order to avoid that combustion gases exit through the slit, a slight over pressure may be applied from outside the slit. Additionally, the pyrometer 4 and the mechanical system are arranged in a (air or water) cooled box.

The one single pyrometer 4 of the embodiment of figure 1 is arranged at an upper wall of the combustion chamber lat an end of the combustion chamber 1 in the conveying direction of the combustion grate 2.

According to the embodiment of figure 2, the single pyrometer 4 is arranged at the front of the combustion chamber 1 (in the conveying direction of the combustion grate 2) above the combustion grate 2.

According to the embodiments of figures 1 and 2 only one pyrometer 4 is embodied. According to the embodiment of figure 3, three movably mounted pyrometers 4 are arranged next to each other perpendicular to the conveying direction of the combustion grate 2. Each pyrometer 4 can be pivoted about one axis, so that each pyrometer 4 can measure the temperature of the solid material bed 3 along a straight line S, so that the temperature can be measured along parallel lines S on top of the solid material bed 3. Additionally, according to the embodiment of figure 3, three gas withdrawal ports 5 are arranged at the top of the combustion chamber 1, wherein the gas withdrawal ports 5 are arranged next to each other perpendicular to the conveying direction of the combustion grate 2.

According to the embodiment of figure 4, only one pyrometer 4 is embodied, which one pyrometer 4 can be pivoted (swiveled) about two axes, the axes being perpendicular to each other, so that the pyrometer 4 can be pivoted in such a way, that the temperature of the solid material bed 3 can be measured along a zigzag shaped line S on top of the solid material bed 3. Therefore, the temperature profile in a two dimensional area can be measured.

With all embodiments a spatially resolved temperature profile of the solid material bed 3 can be measured, wherein the measured temperature profile can be used to control the operation of the incineration plant. In particular, a supply of primary air is controlled in dependence of the measured temperature profile.

Additionally, the measured O₂ content of the combustion gases can be used in addition to the measured temperature profile to control the operation of the incineration plant. This way it is possible to operate the incineration plant in such a way, that a complete combustion of the solid material is possible and in particular to provide the therefore needed optimum primary air volume.

### Reference sings

- 1: combustion chamber
- 2: combustion grate
- 3: solid material bed
- 4: pyrometer
- 5: gas withdrawal port
- S: line

## Claims

1. Incineration plant for solid material having
- a combustion material inlet through which solid material can be introduced,
- a combustion chamber (1) in which the solid material is introduced and in which the solid material is combusted,
- a combustion grate (2) with which the solid material and combusted solid material as solid material bed (3) can be conveyed through the combustion chamber (1),
- a primary air supply below the top of the combustion grate (2),
- at least one pyrometer (4) for measuring the temperature of the solid material bed (3),
**characterized in that**
at least one pyrometer (4) is movably mounted by a mechanical system and that a drive for the mechanical system is embodied, so that during movement of the pyrometer (4) the temperature of the solid material bed (3) can be measured along a line (S).

2. Incineration plant according to claim 1, wherein the mechanical system has one degree of freedom to be moved about, so that the temperature of the solid material bed (3) can be measured along a straight line (S).

3. Incineration plant according to claim 1, wherein the mechanical system has two degrees of freedom to be moved about, so that the temperature of the solid material bed (3) can be measured along a line (S) being curved in two dimensions.

4. Incineration plant according to one of the preceding claims, wherein at least one gas withdrawal port (5) is arranged in the combustion chamber (1), wherein the gas withdrawal port (5) is connected with an O₂-sensor for measuring the O₂ content of the withdrawn gas.

5. Incineration plant according to claim 4, wherein multiple withdrawal ports (5) are arranged on a lateral side or at the top of the combustion chamber (1).

6. Incineration plant according to one of the preceding claims, wherein the pyrometer (4) is connected to a control unit, wherein the incineration plant is operated in dependence of the measured temperature, in particular at least one of the following parameters is controlled in dependence of the measured temperature:
- primary air supply,
- solid material supply,
- secondary air supply,
- combustion grate (2).

7. Incineration plant according to claim 4 or 5 in combination with claim 6, wherein the O₂-sensor is connected to the control unit and wherein the incineration plant is operated in dependence of the measured temperature and of the measured O₂ content.

8. Incineration plant according to one of the preceding claims, wherein the pyrometer (4) and/or the mechanical system are cooled.

9. Method for operating an incineration plant, comprising the following steps:
- Introducing solid material through a combustion material inlet into a combustion chamber (1),
- Combusting the solid material in the combustion chamber (1),
- Conveying the solid material and combusted solid material as solid material bed (3) on a combustion grate (2) through the combustion chamber (1),
- Measuring the temperature of the solid material bed (3) with a pyrometer (4),
- Moving the pyrometer (4) so that the temperature of the solid material bed (3) is measured along a line (S).

10. Method according to claim 9, wherein gas is withdrawn from the combustion chamber (1) and the O₂ content of the withdrawn gas is measured.

11. Method according to one of the preceding claims, wherein the incineration plant is operated in dependence of the measured temperature, in particular at least one of the following parameters is controlled in dependence of the measured temperature:
- primary air supply,
- solid material supply,
- secondary air supply,
- combustion grate (2).

12. Method according to claim 10 and 11, wherein the incineration plant is operated in dependence of the measured temperature and of the measured O₂ content.
